# EUROPEAN PATENT APPLICATION

(11) **EP 4 459 729 A2**
(43) Date of publication of application: **06.11.2024**
(21) Application number: 24163297.5
(22) Date of filing: 13.03.2024
(51) Int. Cl.: H01M 10/0525, H01M 10/0585, H01M 50/105, H01M 50/121, H01M 50/124, H01M 50/133, H01M 10/0562, H01M 10/12

(54) **METHOD OF PRODUCING ALL-SOLID-STATE BATTERY AND ALL-SOLID-STATE BATTERY**

(30) Priority: 01.05.2023 JP 2023075860
(71) Applicant: TOYOTA JIDOSHA KABUSHIKI KAISHA, Aichi-ken 471-8571 (JP)
(72) Inventor: TANAKA, Takumi, Toyota-shi, 471-8571 (JP)
(74) Representative: J A Kemp LLP

(57) **Abstract**

There is provided a method of producing an all-solid-state battery 100, the method including: preparing a structure 60 that includes, in the following order, a first exterior member 10, a first resin layer 20, a cell laminate 30, a second resin layer 40, and a second exterior member 50; and applying pressure to the structure 60 in a thickness direction of the structure 60, at a temperature at which the first resin layer 10 and the second resin layer 20 melt or soften.

## Description

### BACKGROUND

### Technical Field

The present disclosure relates to a method of producing an all-solid-state battery, and an all-solid-state battery.

### Related Art

There have been remarkable developments in research directed to expand the market for all-solid-state batteries, which are a type of lithium ion secondary batteries. All-solid-state batteries are known to be highly safe, operable in a wide temperature range, and easy to increase in energy density, as compared with lithium ion secondary batteries with a liquid-type electrolyte in which an electrolyte is dissolved in an organic solvent.

An all-solid-state battery includes a cell laminate that is formed from a negative electrode layer, a positive electrode layer and a solid electrolyte layer, and is charged or discharged by lithium ions migrating through the layers in the cell laminate. Therefore, an all-solid-state battery is generally compressed in a thickness direction of the cell laminate in order to improve the migration efficiency of lithium ions or suppressing the interlayer separation.

The layers configuring a cell laminate of an all-solid-state battery are manufactured via a process of applying a composition including an active material or a solid electrolyte onto a substrate. Therefore, a certain degree of unevenness in a thickness of a cell laminate is unavoidable. When a cell laminate with an uneven thickness is compressed with a flat plate or a roll, the degree of compression in an in-plane direction of the cell laminate varies. Variation in the degree of compression may affect the performance or durability of an all-solid-state battery.

As a method for reducing variations in pressure to be applied to a cell laminate, for example, Japanese Patent Application Laid-Open (JP-A) No. 2021-177448 proposes disposing a buffer layer between the layers of a cell laminate.

The method disclosed in JP-A No. 2021-177448 may cause an increase in the volume of an all-solid-state battery as a result of disposing a buffer layer in the cell laminate.

### SUMMARY

In view of the foregoing, an embodiment of the present disclosure aims to provide a method of producing an all-solid-state battery, and an all-solid-state battery, in which a degree of compression is equalized favorably in an in-plane direction of a cell laminate.

The means for solving the problem include the following embodiments.
<1> A method of producing an all-solid-state battery, the method comprising:
   preparing a structure that includes, in the following order, a first exterior member, a first resin layer, a cell laminate, a second resin layer, and a second exterior member; and
   applying pressure to the structure in a thickness direction of the structure, at a temperature at which the first resin layer and the second resin layer melt or soften.
<2> The method of producing an all-solid-state battery according to <1>, wherein application of the pressure is performed with an object that is flat at a surface facing the structure.
<3> The method of producing an all-solid-state battery according to <1> or <2>, further comprising applying isotropic pressure to the structure.
<4> An all-solid-state battery, comprising a structure that includes, in the following order, a first exterior member, a first resin layer, a cell laminate, a second resin layer, and a second exterior member, at least one of the first resin layer or the second resin layer being bonded to the cell laminate.
<5> The all-solid-state battery according to <4>, wherein each of the first resin layer and the second resin layer is bonded to the cell laminate.
<6> An all-solid-state battery, comprising a structure that includes, in the following order, a first exterior member, a first resin layer, a cell laminate, a second resin layer, and a second exterior member, a variation in thickness in an in-plane-direction of an entire body of the structure being smaller than a variation in thickness in an in-plane-direction of the cell laminate.
<7> The all-solid-state battery according to any one of <4> to <6>, wherein each of the first resin layer and the second resin layer includes a thermoplastic resin.

### BRIEF DESCRIPTION OF THE DRAWING

Exemplary embodiments of the present disclosure will be described in detail based on the following figure, wherein:

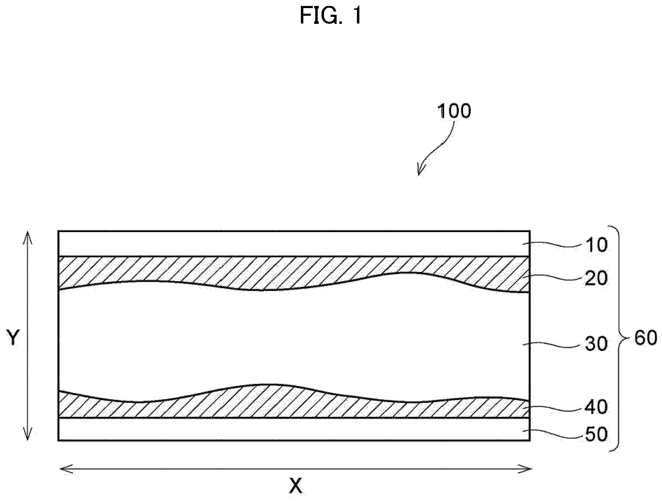

Fig. 1 is a schematic sectional view of an exemplary configuration of an all-solid-state battery according to the present disclosure.

### DETAILED DESCRIPTION

In the present disclosure, any numerical range described using the expression "from * to" represents a range in which numerical values described before and after the "to" are included in the range as a minimum value and a maximum value, respectively.

In a numerical range described in stages, in the present disclosure, an upper limit value or a lower limit value described in one numerical range may be replaced with an upper limit value or a lower limit value in another numerical range described in stages. Further, in a numerical range described in the present disclosure, the upper limit value or the lower limit value in the numerical range may be replaced with a value shown in the Examples.

In the present disclosure, the definition of the term "step" includes not only an independent step which is distinguishable from another step, but also a step which is not clearly distinguishable from another step, as long as the purpose of the step is achieved.

In the present disclosure, a combination of more than one preferred embodiment is a more preferred embodiment.

In the present disclosure, when each component includes plural kinds of substances corresponding to the component, the amount of the component refers to a total amount of the plural kinds of substances, unless otherwise specified.

When an embodiment is explained by referring to a drawings, the configuration of the embodiment is not limited to the configuration illustrated in the drawings. Further, the components in the drawings are schematically described and the embodiments are not limited thereto.

### <Method of producing all-solid-state battery>

The method of producing an all-solid-state battery according to the present disclosure includes:
preparing a structure that includes, in the following order, a first exterior member, a first resin layer, a cell laminate, a second resin layer, and a second exterior member; and
applying pressure to the structure in a thickness direction of the structure, at a temperature at which the first resin layer and the second resin layer melt or soften.

In the following, a first exterior member and a second exterior member may be collectively referred to as an exterior member, and a first resin layer and a second resin layer may be collectively referred to as a resin layer.

In the method according to the present disclosure, pressure is applied to a structure at a temperature at which a resin layer melts or softens. Therefore, the resin layer is deformed in response to irregularities at a surface of a cell laminate, and is bonded to the cell laminate. As a result, it is possible to produce an all-solid-state battery in which the degree of compression in an in-plane direction of a cell laminate is equalized in a favorable manner.

From the viewpoint of equalizing the degree of compression in an in-plane direction of a cell laminate, the application of pressure to the structure is preferably performed with an object that is flat at a surface facing the structure.

By performing the application of pressure to the structure with an object that is flat at a surface facing the structure, it is possible to cause deformation of the first resin layer and the second resin layer in an effective manner.

Examples of the object that is flat at a surface facing the structure includes a flat panel, a roll, and a table having a flat surface.

In the method according to the present disclosure, the conditions for the application of pressure to the structure (hereinafter, also referred to as pressurization) are not particularly limited, and may be selected depending on the purpose or performance of an all-state-battery to be produced.

From the viewpoint of deforming the resin layer to a sufficient degree, the pressure for the pressurization is preferably 0.0001 MPa or more, more preferably 0.001 MPa or more, further preferably 0.01 MPa or more.

From the viewpoint of avoiding the breakage of a cell laminate, the pressure for the pressurization is preferably 100 MPa or less, more preferably 10 MPa or less, further preferably 1 MPa or less.

From the viewpoint of deforming the resin layer to a sufficient degree and avoiding the breakage of a cell laminate, the pressure for the pressurization is preferably from 0.0001 MPa to 100 MPa, more preferably from 0.001 MPa to 10 MPa, further preferably from 0.01 MPa to 1 MPa.

In the method according to the present disclosure, the number of times for the pressurization may be one or more than one.

For example, it is possible to perform, in addition to the pressurization that is performed at a temperature at which the resin layer melts or softens (hereinafter, also referred to as a first pressurization), a second pressurization.

By performing a second pressurization in addition to a first pressurization, it is possible to increase the evenness in a degree of compression in an in-plane-direction of the cell laminate, adjust a rate of compression, or the like.

The second pressurization may be performed either before the first pressurization or after the first pressurization.

The second pressurization may be performed by the same method as the first pressurization, or may be performed by a different method from the first pressurization. From the viewpoint of equalizing a degree of compression in the cell laminate, the second pressurization is preferably performed by applying isotropic pressure to the structure.

The method for applying isotropic pressure to the structure is not particularly limited. For example, the application of isotropic pressure may be performed by a known method using a fluid in a state of liquid, gas or powder as a pressurization medium.

The method according to the present disclosure may include a process other than the pressurization.

For example, the method may include a process of enclosing the cell laminate in the exterior members by bonding the peripheries of the first exterior member and the second exterior member. The bonding may be performed at the same time as the pressurization.

With regard to the details and preferred embodiments of the all-solid-state battery to be produced by the method according to the present disclosure, the details and preferred embodiments of the all-solid-state battery as described below may be referred to.

### <All-solid-state battery (first embodiment)>

The all-solid-state battery according to the first embodiment of the present disclosure includes, in the following order, a first exterior member, a first resin layer, a cell laminate, a second resin layer, and a second exterior member, and at least one of the resin layer or the second resin layer is bonded to the cell laminate.

Each of the first resin layer and the second layer may be bonded to the cell laminate.

### <All-solid-state battery (second embodiment)>

The all-solid-state battery according to the second embodiment of the present disclosure includes, in the following order, a first exterior member, a first resin layer, a cell laminate, a second resin layer, and a second exterior member, and a variation in thickness in an in-plane-direction of an entire body of the structure is less than a variation in thickness in an in-plane-direction of the cell laminate.

In the following, the all-solid-state battery according to the first embodiment and the all-solid-state battery according to the second embodiment may be collectively referred to as the "all-solid-state battery according to the present disclosure".

The all-solid-state battery according to the present disclosure has a resin layer that is disposed between the cell laminate and the exterior member. The resin layer functions to absorb variation in thickness in an in-plane direction of the cell laminate. As a result, when pressure is applied to the all-solid-state battery in a thickness direction, it is possible to suppress variation in a degree of compression in an in-plane direction of the all-solid-state battery.

Fig. 1 is a schematic sectional view illustrating an exemplary configuration of the all-solid-state battery according to the present disclosure.

The all-solid-state battery 100 shown in Fig. 1 has a structure 60 that includes a first exterior member 10, a first resin layer 20, a cell laminate 30, a second resin layer 40, and a second exterior member 50, in this order.

The cell laminate 30 has a thickness that is not even in an in-plane direction (a direction indicated by an arrow X). The first resin layer 10 and the second resin layer 40 are deformed at a surface facing the cell laminate 30 according to the irregularities at a surface of the cell laminate 30. In other words, the variation in thickness of the cell laminate 30 is absorbed by the first resin layer 10 and the second resin layer 40. Therefore, when pressure is applied to the all-solid-state battery 100 in a thickness direction (a direction indicated by an arrow Y), it is possible to reduce a difference between the pressure applied at a portion with a smaller thickness of the cell laminate 30 and the pressure applied at a portion with a greater thickness of the cell laminate 30. As a result, a degree of compression is less likely to vary in an in-plane direction of the cell laminate 30.

While the structure 60 in the all-solid-state battery 100 shown in Fig. 1 consists only of a first exterior member 10, a first resin layer 20, a cell laminate 30, a second resin layer 40, and a second exterior member 50, the configuration of the all-solid-state battery according to the present disclosure is not restricted thereto and may include a layer other than these layers.

The all-solid-state battery 100 shown in Fig. 1 may include a member that is not illustrated, such as a tab lead.

The first exterior member 10 and the second exterior member 50 may be formed of plural members. For example, the first exterior member 10 and the second exterior member 50 may be formed of a substrate layer and a barrier layer.

When a resin layer is not disposed between a cell laminate and an exterior member, or when a resin layer is not deformed according to the irregularities at a surface of a cell laminate, unlike the all-solid-state battery 100 shown in Fig. 1, the pressure applied at a portion of a cell laminate with a greater thickness tends to be greater than the pressure applied at a portion of a cell laminate with a smaller thickness. As a result, a degree of compression is more likely to vary in an in-plane direction of the cell laminate.

In the present disclosure, the method for comparing the variation in thickness of the structure of the all-solid-state battery and the variation in thickness of the cell laminate is not particularly limited, and may be performed by a known method.

For example, the comparison may be based on a difference between a maximum value and a minimum value of the thickness measured at plural portions (preferably at least 5 portions); or may be based on a value of 6σ obtained from the standard deviation σ as an index for the thickness variation. The 6σ refers to a range in which 99.7% of the measured value is included, provided that the thickness variation complies with a normal distribution.

When the thickness variation of an object for the measurement exhibits a trend or a regularity, a difference between a maximum value and a minimum value in thickness is preferably used as an index for the thickness variation. When the thickness variation of an object for the measurement does not exhibit a trend or a regularity, a value of 6σ is preferably used as an index for the thickness variation.

Alternatively, the comparison may be based on the length of a profile line A, measured at a portion corresponding to the structure, and the length of a profile line B, measured at a portion corresponding to the cell structure. The length of the profile lines may be measured from those obtained in an image of a section of the all-solid-state battery.

In the present disclosure, a state in which "a resin layer is bonded to a cell laminate" refers to a state in which a resin layer is fixed to a cell laminate while being in close contact with a cell laminate.

When the resin layer is bonded to the cell laminate, a state in which the thickness variation of the cell laminate is absorbed by the resin layer may be maintained in a favorable manner. As a result, the equality in a degree of compression in an in-plane direction of the cell laminate may be maintained in a favorable state.

From the viewpoint of securing the tightness inside the all-solid-state battery, the resin layer is preferably bonded to each of the cell laminate and the exterior member.

From the viewpoint of securing the flatness at the major planes of the all-solid-state battery, the resin layer is preferably flat at a surface being in contact with the exterior member.

In the following, the cell laminate, exterior member and resin layer configuring the all-solid-state battery are described.

### (Cell laminate)

The cell laminate include at least one unit cell. The constituent elements for the unit cell are not particularly limited, and may be selected from known constituent elements used in all-solid-state batteries.

The unit cell included in the cell laminate may include a negative electrode layer, a solid electrolyte layer, and a positive electrode layer.

The negative electrode layer at least includes a negative electrode active material, the positive electrode layer at least includes a positive electrode active material, and the solid electrolyte layer includes a solid electrolyte.

The negative electrode layer and the positive electrode layer may further include a solid electrolyte.

The negative electrode active material may be selected from materials having an ability to store or release metal ions, such as lithium ions.

Examples of the negative electrode active material include metallic lithium, lithium alloy, carbon materials such as graphite and hard carbon, metal alloy, silicon materials such as silicon alloy and Li₄Ti₅O₁₂ (LTO).

Examples of the solid electrolyte include sulfide-based amorphous solid electrolyte, oxide-based amorphous solid electrolyte, sulfide-based crystalline solid electrolyte, oxide-based crystalline solid electrolyte, iodine-based crystalline solid electrolyte, and nitride-based solid electrolyte.

Examples of the sulfide-based amorphous electrolyte include Li₂S-P₂S₅, Li₂O-Li₂S-P₂S₅, Li₂S, P₂S₅, Li₂S-SiS₂, LiI-Li₂S-SiS₂, LiI-Li₂S-P₂S₅, LiI-Li₂S-P₂O₅, LiI-LiBr-Li₂S-P₂S₅ and LiI-Li₃PO₄-P₂S₅.

Examples of the oxide-based amorphous electrolyte include Li₂O-B₂O₃-P₂O₅ and Li₂O-SiO₂.

Examples of the oxide-based crystalline electrolyte include Li₅La₃Ta₂O₁₂, Li₇Zr₂O₁₂, Li₆BaLa₂Ta₂O₁₂ and Li₃PO (₄₋₃/_{2w})N_{w} (w<1).

Examples of the sulfide-based crystalline electrolyte include glass ceramics such as Li₇P₃S₁₁ and Li_{3.25}P_{0.75}S₄, Thio-Lisicion crystals such as Li_{3.24}P_{0.24}Ge_{0.76}S₄, and materials having an argyrodite-type crystal structure such as Li₆PS₅X (X = Cl or Br). The materials having an argyrodite-type crystal structure may be referred to as argyrodite-type sulfide-based solid electrolytes.

Examples of the iodine-based crystalline solid electrolyte include LiI.

Examples of the nitride-based solid electrolyte include Li₃N.

From the viewpoint of lithium ion conductivity and electrochemical stability, argyrodite-type sulfide-based solid electrolytes are preferred.

Examples of the positive electrode active material include metal oxides including lithium and a transition metal such as manganese, cobalt, nickel and titanium.

Specific examples of the metal oxides include lithium cobalt oxide, lithium nickel oxide, lithium manganese oxide, lithium nickel-cobalt-manganese oxide (NCM), Li-Mn oxide spinel substituted with a different element, lithium titanium oxide, and lithium metal phosphate such as lithium iron phosphate.

The negative electrode layer may be formed of a negative electrode active material layer and a negative electrode current collector.

The positive electrode layer may be formed of a positive electrode active material layer and a positive electrode current collector.

Examples of the material for the negative electrode current collector or the positive electrode current collector include metals such as Ag, Cu, Au, Al, Ni, Fe and Ti and alloys including these metals.

From the viewpoint of chemical stability, the material for the negative electrode current collector is preferably Cu or Ni. When a sulfide-based solid electrolyte is used, Ni is preferred from the viewpoint of avoiding the sulfidation of the negative electrode current collector.

From the viewpoint of chemical stability, the material for the positive electrode current collector is preferably Al.

The negative electrode layer formed of a negative electrode active material and a negative electrode current collector may be obtained by, for example, applying a negative electrode composition, including a negative electrode active material and a binder, onto a surface of the negative electrode current collector, and drying the composition.

The negative electrode active material layer may be formed at one side of the negative electrode current collector, or may be formed at both sides of the negative electrode current collector.

The negative electrode composition may include a solvent for the binder, a conductive material, or the like.

Examples of the method for forming a solid electrolyte layer include a method of performing compression molding to a material including a solid electrode that is in a state of powder or pellets; and a method of applying a material including a solid electrode that is in a state of a paste, onto a base plate, and then drying the same.

The positive electrode layer formed of a positive electrode active material and a positive electrode current collector may be obtained by, for example, applying a positive electrode composition including a positive electrode active material and a binder, onto a surface of the positive electrode current collector, and drying the composition.

The positive electrode active material layer may be formed at one side of the positive electrode current collector, or may be formed at both sides of the positive electrode current collector.

The positive electrode composition may include a solvent for the binder, a conductive material, or the like.

The thickness of the cell laminate is not particularly limited, and may be adjusted depending on the purpose or performance of an all-solid-state battery.

For example, the thickness of the cell laminate may be selected from a range of from 0.1 mm to 20 mm, from 0.5 to 10 mm, or from 1 mm to 5 mm.

### (Resin layer)

The resin layer preferably has an ability to be bonded to the cell laminate.

Examples of the resin layer having an ability to be bonded to the cell laminate include a layer that includes a resin that melts or softens by heating.

Specific examples of the resin that melts or softens by heating include thermoplastic resins. Examples of the thermoplastic resins include polyolefin such as polyethylene and polypropylene, polyamide, polyester such as polyethylene terephthalate, polyurethane, and ethylene-vinyl acetate copolymer.

From the viewpoint of absorbing the thickness variation of the cell laminate to a sufficient degree, the thickness of the resin layer is preferably 10 µm or more, more preferably 10 µm or more, further preferably 10 µm or more. The thickness of the resin layer may be 500 µm or less.

The resin layer may be integrated with the exterior member, or may not be integrated with the exterior member. From the viewpoint of readily performing a process for producing an all-solid-state battery, the resin layer is preferably integrated with the exterior member.

### (Exterior member)

The material for the exterior member is not particularly limited, and may be determined depending on the purpose or performance of an all-solid-state battery.

For example, the exterior member may include a substrate layer and a barrier layer.

The material for the substrate layer is not particularly limited, and may be resin, metal or the like. Examples of the resin include thermoplastic resins as mentioned above, preferably thermoplastic resins that does not melt or soften at a temperature at which a resin included in the resin layer melts or softens.

Examples of the metal include aluminum, aluminum alloy, copper, copper alloy, stainless steel, and nickel.

Examples of the barrier layer include a metal layer and a deposited layer formed by vapor deposition.

The configuration of the all-solid-state battery according to the present disclosure is not particularly limited.

From the viewpoint of demonstrating the effect of the present disclosure, i.e., improving the equality in a degree of compression and a thickness in an in-plane direction of a cell laminate, by way of depositing a resin layer between a cell laminate and an exterior member, the all-solid-state battery according to the present disclosure preferably has a laminate-type configuration.

The thickness of the all-solid-state battery is not particularly limited, and may be determined depending on the purpose or performance of the all-solid-state battery.

For example, the thickness of the all-solid-state battery may be selected from a range of from 0.2 mm to 21 mm, from 0.5 to 10 mm, or from 1 mm to 5 mm.

### Examples

In the following, the present disclosure is explained by referring to the Examples. However, the present disclosure is not limited to the Examples described therein.

### <Embodiment 1>

### (Preparation of positive electrode layer)

A slurry was prepared in which a positive electrode active material with a molar composition of LiNi_{0.5}Co_{0.2}Mn_{0.3}O₂, an argyrodite-type sulfide-based solid electrolyte, a conductive material and a binder are dispersed in a solvent. The slurry was applied at each side of an aluminum foil as a current collector and dried, thereby obtaining a positive electrode layer having a configuration in which a positive electrode active material layer with a thickness of approximately 100 µm was formed at each side of the positive electrode current collector (positive electrode active material layer/positive electrode current collector/positive electrode active material layer).

### (Preparation of negative electrode layer)

A slurry was prepared by dispersing graphite as a negative electrode active material, an argyrodite-type sulfide-based solid electrolyte, and a binder, in a solvent. The slurry was applied at each side of a copper foil as a current collector and dried, thereby obtaining a negative electrode layer having a configuration in which a negative electrode active material layer with a thickness of approximately 200 µm was disposed at each side of the current collector.

A slurry was prepared by dispersing an argyrodite-type sulfide-based solid electrolyte and a binder, in a solvent. The slurry was applied at one side of a metal foil and dried, thereby obtaining a solid electrolyte sheet having a configuration in which a solid-electrolyte layer with a thickness of approximately 30 µm was disposed at one side of the metal foil.

A laminate was obtained by disposing the solid-electrolyte sheet at each side of the negative electrode layer, such that the solid-electrolyte layer is in contact with the negative electrode active material layer. The laminate was subjected to roll pressing and the metal foil was removed from the laminate, thereby obtaining a negative electrode layer with a solid electrolyte layer transferred to each side thereof (solid electrolyte layer/negative electrode active material layer/negative electrode current collector/negative electrode active material layer/solid electrolyte layer).

### (Preparation of all-solid-state battery)

A cell laminate with a thickness of 2 mm was prepared by cutting a negative electrode layer and a positive electrode layer into a predetermined size, and disposing the same in an alternate manner.

The cell laminate was sandwiched by an external member integrated with a resin layer (resin layer made of polypropylene/barrier layer made of aluminum/substrate layer made of polyethylene terephthalate). The periphery of the cell laminate was vacuum-sealed, and the cell laminate was subjected to warm isostatic pressing (WIP) at 190°C.

The external member was removed from the cell laminate after the WIP, and a tab lead was attached to a tab of the cell laminate, i.e., a portion of a current collector at which an electrode layer was not formed. Subsequently, the cell laminate was sandwiched by an external member having the same configuration as described above. The periphery of the cell laminate was vacuum-sealed, thereby obtaining a structure. The structure was sandwiched by flat panels heated at 180°C, and pressure was applied to the structure, whereby an all-solid-state battery having a thickness of 2.5 mm was obtained.

The all-solid-state battery was cut in a thickness direction, and a section thereof was observed. In the section, the resin layers made of polypropylene were bonded to the cell laminate. The resin layers were deformed according to the irregularities at a surface of the cell laminate, and the variation in thickness in an in-plane direction of the cell laminate was absorbed by the resin layers. As a result, the variation in thickness in an in-plane direction of an entire body of the all-solid-state battery was smaller than the variation in thickness in an in-plane direction of the cell laminate.

## Claims

1. A method of producing an all-solid-state battery, the method comprising:
preparing a structure that includes, in the following order, a first exterior member, a first resin layer, a cell laminate, a second resin layer, and a second exterior member; and
applying pressure to the structure in a thickness direction of the structure, at a temperature at which the first resin layer and the second resin layer melt or soften.

2. The method of producing an all-solid-state battery according to claim 1, wherein application of the pressure is performed with an object that is flat at a surface facing the structure.

3. The method of producing an all-solid-state battery according to claim 1 or claim 2, further comprising applying isotropic pressure to the structure.

4. An all-solid-state battery, comprising a structure that includes, in the following order, a first exterior member, a first resin layer, a cell laminate, a second resin layer, and a second exterior member, and satisfying at least one of the following A or B:
A: at least one of the first resin layer or the second resin layer is bonded to the cell laminate; or
B: a variation in thickness in an in-plane-direction of an entire body of the structure is smaller than a variation in thickness in an in-plane-direction of the cell laminate.

5. The all-solid-state battery according to claim 4, wherein at least one of the first resin layer or the second resin layer is bonded to the cell laminate.

6. The all-solid-state battery according to claim 4 or claim 5, wherein a variation in thickness in an in-plane-direction of an entire body of the structure is smaller than a variation in thickness in an in-plane-direction of the cell laminate.

7. The all-solid-state battery according to any one of claim 4 to claim 6, wherein each of the first resin layer and the second resin layer is bonded to the cell laminate.

8. The all-solid-state battery according to any one of claim 4 to claim 7, wherein each of the first resin layer and the second resin layer includes a thermoplastic resin.
